# EUROPÄISCHE PATENTSCHRIFT

(11) **EP 3 388 796 B1**
(45) Veröffentlichungstag und Bekanntmachung des Hinweises auf die Patenterteilung: **25.08.2021**
(21) Anmeldenummer: 18161939.6
(22) Anmeldetag: 15.03.2018
(51) Int. Cl.: G01F 23/292, A47J 31/44

(54) **HEISSGETRÄNKEZUBEREITUNGSVORRICHTUNG**
HOT BEVERAGE PREPARATION DEVICE
DISPOSITIF DE PRÉPARATION DE BOISSONS CHAUDES

(30) Priorität: 31.03.2017 DE 102017205567
(43) Veröffentlichungstag der Anmeldung: 17.10.2018
(73) Patentinhaber: BSH Hausgeräte GmbH, 81739 München (DE)
(72) Erfinder: Brunner, Andreas, 83301 Traunreut (DE); Mathes, Anton, 83364 Neukirchen am Teisenberg (DE); Stadler, Georg, 5101 Bergheim b. Salzburg (AT)

(56) Entgegenhaltungen:
- EP-A1- 1 943 930
- EP-A1- 2 228 633
- EP-A1- 2 543 287
- EP-A2- 3 026 404
- WO-A1-2006/063645
- WO-A1-2014/169447
- US-A1- 2013 060 528

## Beschreibung

Die vorliegende Erfindung betrifft eine Heißgetränkezubereitungsvorrichtung, insbesondere einen Kaffeevollautomaten, mit einem Laser-Füllstandsmessgerät.

Heißgetränkezubereitungsvorrichtungen zur Zubereitung heißer Getränke, insbesondere von Kaffee oder Cappuccino, wie beispielsweise Kaffeevollautomaten, sind bekannt. Bekannte Heißgetränkezubereitungsvorrichtungen weisen zum Erfassen eines Füllstands eines Flüssigkeitsbehälters beispielsweise einen Schwimmer auf. Dieser kann jedoch fehleranfällig sein, beispielsweise wenn der Schwimmer im Laufe des Gebrauchs zum Taucher mutiert. Alternativ ist bekannt, die Wassermenge der Heißgetränkezubereitungsvorrichtung durch eine Software abzuschätzen. Diese Schätzung ist jedoch ebenfalls fehleranfällig. Beispielsweise wird nicht erkannt, wenn ein Kunde den Flüssigkeitsbehälter nur teilweise befüllt, womit dadurch bedingt die Meldung eines leeren Flüssigkeitsbehälters zu spät erfolgt. Zudem sind aus der WO 2006/063645 A1 und der WO 2014/169447 A1 Heißgetränkezubereitungsvorrichtungen mit einem Laser-Füllstandsmessgerät bekannt.

Bei Heißgetränkezubereitungsvorrichtungen wird bisher zum Ermitteln einer gewünschten Information meist ein bestimmtes Verfahren verwendet, und zum Ermitteln einer zweiten Information ein zweites Verfahren. Beispielsweise wird über einen Reedschalter ausgewertet, ob ein Wassertank in der Heißgetränkezubereitungsvorrichtung eingesetzt ist. Ein Schwimmer ist zum Ermitteln des Füllstands des Flüssigkeitsbehälters vorgesehen. Ein Verfahren zum Ermitteln multipler Informationen mit ein und demselben Verfahren ist dagegen nicht bekannt.

Aufgabe der vorliegenden Erfindung ist es, eine Heißgetränkezubereitungsvorrichtung anzugeben, die sich durch ein vereinfachtes Auswertverfahren multipler Informationen auszeichnet, wobei sich insbesondere insgesamt die Fehleranfälligkeit bezüglich Fehlinformationen reduziert.

Diese Aufgabe wird durch eine Heißgetränkezubereitungsvorrichtung mit den Merkmalen des Anspruchs 1 gelöst. Vorteilhafte Weiterbildungen der Erfindung sind Gegenstand der Unteransprüche.

Erfindungsgemäß weist eine Heißgetränkezubereitungsvorrichtung, insbesondere ein Kaffeevollautomat, zumindest einen Flüssigkeitsbehälter und ein Laser-Füllstandsmessgerät zum Messen des Füllstands im Flüssigkeitsbehälter auf. Das Laser-Füllstandsmessgerät ist zum Aussenden und Empfangen zumindest einer Laserstrahlung geeignet, wobei das Laser-Füllstandsmessgerät neben dem Messen des Füllstands konfiguriert ist, zumindest eine weitere Information zu ermitteln. Das Laser-Füllstandsmessgerät kann also neben dem Messen des Füllstands mindestens eine weitere Information erfassen. Damit ist das Laser-Füllstandsmessgerät konfiguriert, multiple Informationen der Heißgetränkezubereitungsvorrichtung zu erfassen. Um neben der Füllstandsmessung weitere Daten zu erfassen, sind damit keine weiteren Messgeräte oder zusätzliche Sensoren wie beispielsweise Reedschalter, Reedsensoren oder Schwimmer notwendig. Die Fehleranfälligkeit reduziert sich durch das Verwenden lediglich eines Laser-Füllstandsmessgeräts mit Vorteil. Die Gefahr von Fehlinformationen durch das Laser-Füllstandsmessverfahren ist vorteilhafterweise reduziert.

Die Flüssigkeitsmessung im Flüssigkeitsbehälter durch ein Laserverfahren bietet den Vorteil einer genauen und stufenlosen Ermittlung des tatsächlichen Flüssigkeitsstands beziehungsweise Füllstands. Eine softwareabhängige Fehlinformation basierend auf ein kundenabhängiges nur teilweises Befüllen des Flüssigkeitsbehälters kann vorteilhafterweise vermieden werden.

Unter einer Heißgetränkezubereitungsvorrichtung ist insbesondere ein Getränkeausgebender Automat zu verstehen, der geeignet ist, auf Knopfdruck Heißgetränke bereitzustellen. Beispielsweise ist die Heißgetränkezubereitungsvorrichtung ein Kaffeevollautomat, bevorzugt ein Einbau-Kaffeevollautomat.

Unter einem Flüssigkeitsbehälter ist insbesondere ein Behälter der Heißgetränkezubereitungsvorrichtung zu verstehen, der dafür vorgesehen ist, Flüssigkeit wie beispielsweise Wasser oder Milch aufzunehmen und bei der Heißgetränkezubereitung auszugeben. Hierfür ist der Flüssigkeitsbehälter insbesondere von der Heißgetränkezubereitungsvorrichtung abnehmbar ausgebildet, damit der Kunde manuell Wasser oder Milch in den Flüssigkeitsbehälter einfüllen kann.

Das Laser-Füllstandsmessgerät ist dafür vorgesehen und geeignet, den Füllstand der Flüssigkeit im Flüssigkeitsbehälter zu erfassen und/oder zu vermessen. Hierfür findet insbesondere eine hierfür geeignete Laserstrahlung Verwendung, die von dem Laser-Füllstandsmessgerät ausgesendet wird. Die anschließende, zu dem Laser-Füllstandsmessgerät rückreflektierende Laserstrahlung wird von dem Laser-Füllstandsmessgerät empfangen, erfasst und entsprechend ausgewertet. Neben dem Erfassen des Füllstands kann durch die rückreflektierende Laserstrahlung zumindest eine weitere Information ermittelt und bestimmt werden.

Die von dem Laser-Füllstandsmessgerät verwendete Laserstrahlung ist dafür konfiguriert, den Füllstand des Flüssigkeitsbehälters sowie zumindest eine weitere Information zu erfassen. Hierfür findet Laserstrahlung mit einem geeigneten elektromagnetischen Spektrum Verwendung.

Unter einer weitere Information ist insbesondere jegliche Information die Heißgetränkezubereitungsvorrichtung betreffend zu verstehen. Hierbei ist nicht zwingend erforderlich, dass die weitere Information auch den Flüssigkeitsbehälter betrifft. Insbesondere kann die weitere Information jegliche Komponenten der Heißgetränkezubereitungsvorrichtung betreffen, wie beispielsweise die Tropfschale beziehungsweise Auslaufschale, einen weiteren Flüssigkeitsbehälter oder einen Bohnenbehälter.

Bei einer bevorzugten Weiterbildung der Erfindung ist das Laser-Füllstandsmessgerät neben der weiteren Information konfiguriert, weitere zusätzliche Informationen zu ermitteln.

Das Laser-Füllstandsmessgerät ist also dafür vorgesehen, den Füllstand zu messen, eine weitere Information zu erfassen und eine hiervon unterschiedliche, zusätzliche Information zu ermitteln. Insgesamt können durch das Laser-Füllstandsmessgerät damit mindestens drei Informationen eingeholt werden, nämlich der Füllstand, die weitere Information und die zusätzliche Information. Insbesondere sind die weitere Information, die weitere zusätzliche Information und der Füllstand voneinander unterschiedliche Informationen.

Unter einer weiteren zusätzlichen Information ist wiederum insbesondere jegliche Information die Heißgetränkezubereitungsvorrichtung betreffend zu verstehen. Hierbei ist nicht zwingend erforderlich, dass die weitere zusätzliche Information den Flüssigkeitsbehälter betrifft. Insbesondere kann die weitere zusätzliche Information jegliche Komponente der Heißgetränkezubereitungsvorrichtung betreffen, wie beispielsweise die Tropfschale beziehungsweise Auslaufschale, einen weiteren Flüssigkeitsbehälter oder einen Bohnenbehälter.

Bei einer weiteren bevorzugten Weiterbildung der Erfindung ist die weitere Information oder eine der weiteren zusätzlichen Informationen das Vorhandensein des Flüssigkeitsbehälters in der Heißgetränkezubereitungsvorrichtung. Durch die Verwendung des Laser-Füllstandsmessgerät als Auswerteinheit für das Vorhandensein des Flüssigkeitsbehälters in der Heißgetränkezubereitungsvorrichtung kann auf einen herkömmlicherweise verwendeten Reedschalter, der bisher diese Aufgabe übernommen hat, verzichtet werden. Eine zusätzliche Auswerteinheit zum Bestimmen des Vorhandenseins des Flüssigkeitsbehälters ist mit Vorteil dadurch überflüssig. Fehleranfälligkeiten bedingt durch eine weitere Auswerteinheit können so vorteilhafterweise vollständig vermieden werden.

Das Laser-Füllstandsmessgerät misst in diesem Fall also den Füllstand des Flüssigkeitsbehälters und erkennt gleichzeitig, ob der Flüssigkeitsbehälter überhaupt in der Heißgetränkezubereitungsvorrichtung eingesetzt ist. Hierbei handelt es sich vorteilhafterweise um denselben Flüssigkeitsbehälter. Das bedeutet, es wird das Vorhandensein des Flüssigkeitsbehälters und gleichzeitig dessen Füllstand ermittelt.

Bei einer weiteren bevorzugten Weiterbildung der Erfindung ist die weitere Information oder eine der weiteren zusätzlichen Informationen das Vorhandensein eines Wasserfilters in dem Flüssigkeitsbehälter. Ohne einer zusätzlichen Sensorik kann also vorteilhafterweise ermittelt werden, ob ein Wasserfilter eingesetzt ist, beziehungsweise, ob bei einem Entkalken der Heißgetränkezubereitungsvorrichtung der Wasserfilter vom Kunden entfernt wurde.

Das Laser-Füllstandsmessgerät misst also in diesem Fall neben dem Füllstand des Flüssigkeitsbehälters beispielsweise als weitere Information die Verwendung beziehungsweise das Vorhandensein eines Wasserfilters. Zusätzlich kann das Laser-Füllstandsmessgerät als weitere zusätzliche Information das Vorhandensein des Flüssigkeitsbehälters erfassen. Mit einem einzigen Messgerät beziehungsweise Messverfahren sind somit drei Informationen abrufbar, die vorzugsweise ein und denselben Flüssigkeitsbehälter, insbesondere den Wassertank, betreffen. Fehleranfälligkeiten bei der Informationsermittlung beziehungsweise Auswertung können so mit Vorteil reduziert werden. Eine kostengünstige und platzsparende Auswerteinheit aufgrund der multiplen Funktion der Auswerteinheit kann mit Vorteil realisiert werden.

Bei einer weiteren bevorzugten Weiterbildung der Erfindung ist die weitere Information oder eine der weiteren zusätzlichen Informationen das Verwenden einer ausreichenden Menge eines Entkalkers im Flüssigkeitsbehälter. Das Laser-Füllstandsmessgerät kann in diesem Fall also zusätzlich erkennen, ob ein Entkalker in den Flüssigkeitsbehälter gefüllt ist und ob dieser in richtiger beziehungsweise ausreichender Menge eingefüllt ist.

Beispielsweise färbt der für die Heißgetränkezubereitungsvorrichtung richtige Entkalker das Wasser des Flüssigkeitsbehälters in einer kräftigen Farbe. Dadurch ändert sich die an das Laser-Füllstandsmessgerät rückreflektierende Laserstrahlung im Bereich des Wassers des Flüssigkeitsbehälters. Anhand des veränderten Empfangsprofils der Laserstrahlung, das von dem Laser-Füllstandsmessgerät empfangen und erfasst wird, kann das Laser-Füllstandsmessgerät erkennen, dass der richtige Entkalker in der richtigen Menge Verwendung findet, womit sich das Risiko einer Fehlbedienung durch den Kunden und dadurch bedingte Gerätefehler oder gar Geräteausfälle mit Vorteil reduziert.

Das Laser-Füllstandsmessgerät misst in diesem Fall neben dem Füllstand des Flüssigkeitsbehälters beispielsweise als weitere Information die Verwendung einer ausreichenden Menge eines Entkalkers. Zusätzlich kann das Laser-Füllstandsmessgerät als weitere zusätzliche Information das Vorhandensein des Flüssigkeitsbehälters und/oder das Verwenden beziehungsweise Vorhandensein eines Wasserfilters erfassen. Mit dem Laser-Füllstandsmessgerät können so vorteilhafterweise vier Informationen ermittelt werden, die den Flüssigkeitsbehälter, insbesondere den Wassertank der Heißgetränkezubereitungsvorrichtung betreffen.

Bei einer weiteren bevorzugten Weiterbildung der Erfindung ist die weitere Information oder eine der weiteren zusätzlichen Informationen der Füllstand eines zweiten Flüssigkeitsbehälters. Beispielsweise weist die Heißgetränkezubereitungsvorrichtung neben dem Wassertank zusätzlich einen Tank für Milch auf, um beispielsweise einen Milchkaffee oder Cappuccino zubereiten zu können. Das Laser-Füllstandsmessgerät kann dabei neben dem Füllstand des Wassertanks zusätzlich den Füllstand des Milchtanks erfassen.

Zusätzlich ist es möglich, dass das Laser-Füllstandsmessgerät neben den beiden Füllständen das Vorhandensein des Wassertanks und/oder des Milchtanks, das Vorhandensein des Wasserfilters und/oder das Verwendung einer ausreichenden Menge eines Entkalkers als weitere Information und/oder als weitere zusätzliche Information erfasst. Mit dem Laser-Füllstandsmessgerät können so alle notwendigen Informationen erfasst und abgerufen werden, die die Flüssigkeitsbehälter betreffen, wie beispielsweise den Wassertank und den Milchtank.

Bei einer weiteren bevorzugten Weiterbildung der Erfindung umfasst das Laser-Füllstandsmessgerät einen Sender und einen Empfänger für die Laserstrahlung, wobei ein Abstand zwischen dem Sender und einem zu messenden Objekt mittels der Laserstrahlung gemessen wird. Insbesondere misst das Laser-Füllstandsmessgerät den Abstand zwischen dem Sender und den sich darunter befindlichen, vorzugsweise auf einer Linie liegenden Objekten. Zum Ermitteln des Füllstands, der weiteren Information und/oder der weiteren zusätzlichen Information ermittelt das Laser-Füllstandsmessgerät den Verlauf des Abstandes zwischen Laser-Füllstandsmessgerät und zu messendem Objekt. Das Laser-Füllstandsmessgerät kann dann den Verlauf des gemessenen Abstandes auswerten und daraus entsprechende Informationen ableiten.

Vorzugsweise scannt das Laser-Füllstandsmessgerät mittels der Laserstrahlung den Flüssigkeitsbehälter insbesondere in einer Linie ab und erstellt daraus ein Entfernungsprofil. Aus diesem Entfernungsprofil lassen sich anschließend alle erforderlichen beziehungsweise erwünschten Informationen gewinnen, wie beispielsweise das Vorhandensein des Wassertanks und/oder des Milchtanks, optional oder zusätzlich das Vorhandensein des Wasserfilters, optional oder zusätzlich den Füllstand des Wassertanks und/oder des Milchtanks und optional oder zusätzlich das Verwenden einer ausreichenden Menge des Entkalkers.

Vorzugsweise ist das Scann-Verfahren eindimensional oder zweidimensional. Bei einem eindimensionalen Scann-Verfahren werden lediglich Punkte, beispielsweise zwei Punkte, abgescannt, und daraus die gewünschten Informationen ermittelt. Bei einem zweidimensionalen Scann-Verfahren wird eine Fläche erfasst beziehungsweise abgescannt, die Rückschlüsse auf die gewünschten Informationen liefert.

Alternativ kann das Laser-Füllstandsmessgerät einen sogenannten Laser-Fächer umfassen, der zum Ermitteln der gewünschten Informationen Verwendung findet. Ein Abscannen ist dabei nicht notwendig, da jegliche gewünschten Informationen bereits durch den Laser-Fächer erfasst und ermittelt werden können.

Bei einer weiteren bevorzugten Weiterbildung der Erfindung weist der Flüssigkeitsbehälter zumindest bereichsweise ein transparentes Fenster auf. Zum Ermitteln der gewünschten Informationen wird durch das transparente Fenster die Laserstrahlung des Laser-Füllstandsmessgeräts zur Flüssigkeit des Flüssigkeitsbehälters gesendet und zurückreflektiert. So kann ein Entfernungsprofil erstellt und hieraus die gewünschten Informationen ermittelt werden.

Im Bereich des transparenten Fensters kann zusätzlich ein Schwimmer angebracht sein, der dem Kunden zu Informationszwecken zusätzlich den Wasserpegel anzeigt.

Unter einem transparenten Fenster ist insbesondere ein begrenzter Bereich des Flüssigkeitsbehälters zu verstehen, der für die von dem Laser-Füllstandsmessgerät ausgesendete Laserstrahlung weitestgehend strahlungsdurchlässig ist. Insbesondere ist das transparente Fenster mehr als 60%, bevorzugt mehr als 80%, besonders bevorzugt mehr als 90% für die Laserstrahlung durchlässig.

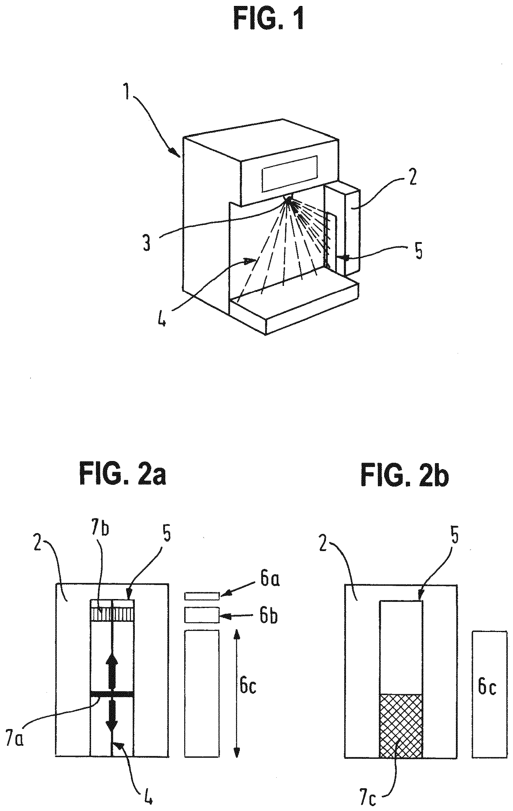

Weitere Vorteile, vorteilhafte Ausführungsformen und Weiterbildungen der Heißgetränkezubereitungsvorrichtung ergeben sich aus den im Folgenden in Verbindung mit den Figuren 1 und 2 beschriebenen Ausführungsformen. Es zeigen
- Figur 1: einen schematischen Aufbau eines Ausführungsbeispiels einer erfindungsgemäßen Heißgetränkezubereitungsvorrichtung, und
- Figuren 2A, 2B: jeweils ein schematischer Ausschnitt aus dem Flüssigkeitsbehälter eines Ausführungsbeispiels einer erfindungsgemäßen Heißgetränkezubereitungsvorrichtung.

In den Ausführungsbeispielen und Figuren können gleiche oder gleich wirkende Bestandteile jeweils mit den gleichen Bezugszeichen versehen sein. Die dargestellten Bestandteile und deren Größenverhältnisse zueinander sind grundsätzlich nicht als maßstabsgerecht anzusehen. Vielmehr können einzelne Elemente wie beispielsweise Schichten, Teile, Elemente, Komponenten und Bereiche zur besseren Darstellbarkeit und/oder zum besseren Verständnis übertrieben dick oder groß dimensioniert dargestellt sein.

In Figur 1 ist eine Heißgetränkezubereitungsvorrichtung 1, insbesondere ein Kaffeevollautomat, in einer schematischen Queransicht gezeigt. Der Kaffeevollautomat weist die üblichen Komponenten beziehungsweise Bestandteile wie beispielsweise Tropfschale, Anzeige und Getränkeausgabe auf, und ist vorgesehen zur Ausgabe von Heißgetränken wie beispielsweise unter anderem Kaffee, Espresso, Cappuccino und heißes Wasser.

Seitlich an dem Kaffeevollautomat ist ein Flüssigkeitsbehälter 2 angeordnet, der abnehmbar von den restlichen Komponenten des Kaffeevollautomaten ausgebildet ist. Insbesondere ist der Flüssigkeitsbehälter 2 ein Wassertank, der zur Zubereitung des gewünschten Heißgetränks vom Benutzer mit Wasser zu befüllen ist. Der Wassertank weist ein transparentes Fenster 5 auf, um dem Benutzer Einsicht in den Wassertank bezüglich des Füllstands zu gewährleisten. Um den Füllstand des Wassertanks deutlich anzuzeigen, kann hinter dem transparenten Fenster ein Schwimmer angebracht sein, der dem Benutzer den Wasserpegel in dem Wassertank anzeigt.

Der Kaffeevollautomat weist weiter ein Laser-Füllstandsmessgerät 3 auf, der zum Aussenden und zum Empfangen von Laserstrahlung 4 geeignet und vorgesehen ist. Insbesondere ist das Laser-Füllstandsmessgerät 3 dafür vorgesehen, den Zustand des Wassertanks zu erkennen und Informationen diesbezüglich zu ermitteln. Hierfür misst das Laser-Füllstandsmessgerät 3 einen Abstand zwischen einem Sender des Laser-Füllstandsmessgeräts 3 und den sich darunter befindlichen, auf einer Linie liegenden Objekten. Das Laser-Füllstandsmessgerät 3 kann dann den Verlauf des gemessenen Abstandes auswerten und daraus entsprechende Informationen ableiten.

Beispielsweise ermittelt das Laser-Füllstandsmessgerät 3 den Füllstand des Wassertanks. Zusätzlich ist es mit dem Laser-Füllstandsmessgerät 3 möglich weitere Informationen einzuholen, wie beispielsweise unter anderem das Verwenden eines Wasserfilters, das Verwenden einer ausreichenden Menge eines Entkalkers, das Vorhandensein des Wassertanks in dem Kaffeevollautomat und/oder das Vorhandensein eines zweiten Flüssigkeitsbehälters, wie beispielsweise eines Milchtanks, sowie dessen Füllstand. Die genauere Informationsermittlung ist in Zusammenhang mit den Figuren 2a, 2b näher erläutert.

Figur 2a zeigt das transparente Fenster 5 des Flüssigkeitsbehälters 2, insbesondere des Wassertanks, in Frontsicht. Der Wassertank, insbesondere das transparente Fenster 5, ist dabei in drei Bereiche 6a, 6b, 6c unterteilt. Diese drei Bereiche 6a, 6b, 6c sind der Information halber benachbart zum Wassertank eingezeichnet und nicht Bestandteil des Wassertanks. Der Wassertank findet beispielsweise Verwendung bei einem Kaffeevollautomat gemäß dem Ausführungsbeispiel der Figur 1.

Die Laserstrahlung 4 des Laser-Füllstandsmessgeräts tastet beziehungsweise scannt das transparente Fenster 5 entlang der eingezeichneten Linie ab und erstellt daraus ein Entfernungsprofil. Aus diesem Entfernungsprofil lassen sich Informationen den Wassertank betreffend ermitteln.

Ist der Wassertank in dem Kaffeevollautomat von dem Benutzer eingesetzt beziehungsweise in dem Kaffeevollautomat vorhanden, misst das Laser-Füllstandsmessgerät mittels der Laserstrahlung 4 in einem ersten Bereich 6a eine kurze Entfernung. Ist kein Wassertank eingesetzt beziehungsweise vorhanden, ist die gemessene Entfernung im ersten Bereich 6a weitaus größer als mit eingesetztem Wassertank.

Verwendet der Kunde beziehungsweise Benutzer einen Wasserfilter 7b, wird dieser direkt hinter das transparente Fenster 5 montiert und deckt dabei einen gewissen Bereich des transparenten Fensters 5 ab, der sich insbesondere im zweiten Bereich 6b befindet. Ist also ein Wasserfilter 7b eingesetzt, misst das Laser-Füllstandsmessgerät 3 mittels der Laserstrahlung 4 im zweiten Bereich 6b eine kurze Entfernung. Bei nicht eingesetztem Wasserfilter 6b dagegen ist die Entfernung im zweiten Bereich 6b weitaus höher.

Um den Füllstand 7a des Wassertanks zu ermitteln, misst das Laser-Füllstandsmessgerät 3 mittels der Laserstrahlung 4 im dritten Bereich 6c eine weite Entfernung mit einer Spitze, die ein Maß für den Füllstand 7a des Wassertanks wiedergibt.

Mit dem Laser-Füllstandsmessgerät 3 können also eine Vielzahl von Informationen den Wassertank betreffend ermittelt werden. Dabei kann der Füllstand 7a des Wassertanks sehr genau und stufenlos ermittelt werden. Weitere Sensoren, wie beispielsweise Reedsensoren zum Abfragen des Vorhandenseins des Wassertanks werden nicht mehr benötigt, da diese Funktion bereits vom Laser-Füllstandsmessgerät 3 übernommen wird. Es kann weiter über das gleiche Laser-Füllstandsmessgerät 3 ohne zusätzliche Sensorik ermittelt werden, ob ein Wasserfilter 7b eingesetzt ist. Ein zusätzliches Prüfen, ob bei einem Entkalken des Kaffeevollautomaten der Wasserfilter 7b entfernt wurde, ist dadurch mit Vorteil nicht mehr notwendig.

Wird an beiden Seiten des Kaffeevollautomaten ein Flüssigkeitsbehälter angebracht (nicht dargestellt), beispielsweise an einer Seite der Wassertank und an einer gegenüberliegenden Seite ein Milchtank, kann das Laser-Füllstandsmessgerät 3 den Füllstand und das Vorhandensein beider Tanks erfassen und hierzu Informationen ermitteln.

Um das Verwenden einer ausreichenden und richtigen Menge eines Entkalker 7c zu überprüfen, findet das Laser-Füllstandsmessgerät 3 ebenfalls Verwendung. Dies ist in Figur 2b näher dargestellt, die wie Figur 2a das transparente Fenster 5 des Flüssigkeitsbehälters 2, insbesondere des Wassertanks, in Frontsicht zeigt.

Wird von dem Benutzer ein Entkalker 7c eingesetzt, der für den Kaffeevollautomaten vorgesehen ist, färbt dieser Entkalker 7c das Wasser des Wassertanks in einer kräftigen Farbe. Dadurch kann das Laser-Füllstandsmessgerät 3 mittels der Laserstrahlung erkennen, dass Entkalker 7c in der richtigen Menge in den Wassertank gefüllt ist, indem das Laser-Füllstandsmessgerät 3 im dritten Bereich 6c einen großen Bereich mit kurzer Entfernung misst, der unten, also an einem Boden des Wassertanks beginnt.

Damit kann nicht nur ermittelt werden, ob Entkalker 7c in ausreichender Menge vorhanden ist, sondern es wird zusätzlich sichergestellt, dass der Kunde nur mit dem für den Kaffeevollautomaten empfohlenen Entkalker 7c entkalkt. Denn nur Entkalker 7c, der das Wasser des Wassertanks einfärbt, wird von dem Laser-Füllstandsmessgerät 3 erkannt und entsprechend vermessen. Dadurch reduziert sich mit Vorteil die Gefahr einer Geräteschädigung durch Verwendung eines nicht empfohlenen Entkalters 7c.

Die Erläuterung der erfindungsgemäßen Heißgetränkezubereitungsvorrichtung anhand der oben beschriebenen Ausführungsbeispiele ist nicht als Beschränkung der Erfindung auf diese zu betrachten.

### Bezugszeichenliste

- 1: Heißgetränkezubereitungsvorrichtung
- 2: Flüssigkeitsbehälter
- 3: Laser-Füllstandsmessgerät
- 4: Laserstrahlung
- 5: transparentes Fenster
- 6a: erster Bereich
- 6b: zweiter Bereich
- 6c: dritter Bereich
- 7a: Füllstand
- 7b: Wasserfilter
- 7c: Entkalker

## Patentansprüche

1. Heißgetränkezubereitungsvorrichtung (1), insbesondere Kaffeevollautomat, mit zumindest einem Flüssigkeitsbehälter (2) und mit einem Laser-Füllstandsmessgerät (3) zum Messen des Füllstands (7a) im Flüssigkeitsbehälter (2), das zum Aussenden und Empfangen zumindest einer Laserstrahlung (4) geeignet ist, **dadurch gekennzeichnet, dass** das Laser-Füllstandsmessgerät (3) neben dem Messen des Füllstands (7a) konfiguriert ist, zumindest eine weitere Information zu ermitteln.

2. Heißgetränkezubereitungsvorrichtung (1) nach Anspruch 1, wobei das Laser-Füllstandsmessgerät (3) neben der weiteren Information konfiguriert ist, weitere zusätzliche Informationen zu ermitteln.

3. Heißgetränkezubereitungsvorrichtung (1) nach Anspruch 1 oder 2, wobei die weitere Information oder eine der weiteren zusätzlichen Informationen das Vorhandensein des Flüssigkeitsbehälters (2) in der Heißgetränkezubereitungsvorrichtung (1) ist.

4. Heißgetränkezubereitungsvorrichtung (1) nach einem der vorhergehenden Ansprüche, wobei
die weitere Information oder eine der weiteren zusätzlichen Informationen das Vorhandensein eines Wasserfilters (7b) in dem Flüssigkeitsbehälter (2) ist.

5. Heißgetränkezubereitungsvorrichtung (1) nach einem der vorhergehenden Ansprüche, wobei
die weitere Information oder eine der weiteren zusätzlichen Informationen das Verwenden einer ausreichenden Menge eines Entkalkers (7c) im Flüssigkeitsbehälter (2) ist.

6. Heißgetränkezubereitungsvorrichtung (1) nach einem der vorhergehenden Ansprüche, wobei
die weitere Information oder eine der weiteren zusätzlichen Informationen der Füllstand (7a) eines zweiten Flüssigkeitsbehälters ist.

7. Heißgetränkezubereitungsvorrichtung (1) nach einem der vorhergehenden Ansprüche, wobei
das Laser-Füllstandsmessgerät (3) einen Sender und einen Empfänger für die Laserstrahlung (4) umfasst, wobei ein Abstand zwischen dem Sender und einem zu messenden Objekt mittels der Laserstrahlung (4) gemessen wird.

8. Heißgetränkezubereitungsvorrichtung (1) nach Anspruch 7, wobei
zum Ermitteln des Füllstands (7a), der weiteren Information und/oder der weiteren zusätzlichen Information das Laser-Füllstandsmessgerät (3) den Verlauf des Abstandes zwischen Laser-Füllstandsmessgerät (3) und zu messendem Objekt ermittelt.

9. Heißgetränkezubereitungsvorrichtung (1) nach einem der vorhergehenden Ansprüche, wobei
das Laser-Füllstandsmessgerät (3) mittels der Laserstrahlung (4) den Flüssigkeitsbehälter (2) abscannt und ein Entfernungsprofil erstellt.

10. Heißgetränkezubereitungsvorrichtung (1) nach einem der vorhergehenden Ansprüche, wobei
der Flüssigkeitsbehälter (2) zumindest bereichsweise ein transparentes Fenster (5) aufweist.

## Claims

1. Hot beverage preparation device (1), in particular coffee machine, with at least one liquid container (2) and with a laser fill level measuring device (3) for measuring the fill level (7a) in the liquid container (2), which is suited to emitting and receiving at least one laser beam (4), **characterised in that** in addition to measuring the fill level (7a), the laser fill level measuring device (3) is configured to determine at least one further item of information.

2. Hot beverage preparation device (1) according to claim 1, wherein in addition to the further information, the laser fill level measuring device (3) is configured to determine further additional information.

3. Hot beverage preparation device (1) according to claim 1 or 2, wherein the further information or one of the further additional items of information is the presence of the liquid container (2) in the hot beverage preparation device (1).

4. Hot beverage preparation device (1) according to one of the preceding claims, wherein the further information or one of the further additional items of information is the presence of a water filter (7b) in the liquid container (2).

5. Hot beverage preparation device (1) according to one of the preceding claims, wherein the further information or one of the further additional items of information is the use of an adequate quantity of softening agent (7c) in the liquid container (2).

6. Hot beverage preparation device (1) according to one of the preceding claims, wherein the further item of information or one of the further additional items of information is the fill level (7a) of a second liquid container.

7. Hot beverage preparation device (1) according to one of the preceding claims, wherein the laser fill level measuring device (3) comprises a transmitter and a receiver for the laser beam (4), wherein a distance between the transmitter and an object to be measured is measured by means of the laser beam (4).

8. Hot beverage preparation device (1) according to claim 7, wherein in order to determine the fill level (7a), the further information and/or the further additional information, the laser fill level measuring device (3) determines the course of the distance between laser fill level measuring device (3) and object to be measured.

9. Hot beverage preparation device (1) according to one of the preceding claims, wherein the laser fill level measuring device (3) scans the liquid container (2) and produces a distance profile by means of the laser beam (4).

10. Hot beverage preparation device (1) according to one of the preceding claims, wherein the liquid container (2) has a transparent window (5) at least in regions.

## Revendications

1. Dispositif de préparation de boissons chaudes (1), en particulier machine à café automatique, avec au moins un récipient de liquide (2) et avec un appareil de mesure de niveau de remplissage par laser (3) permettant de mesurer le niveau de remplissage (7a) dans le récipient de liquide (2) qui est adapté pour l'envoi et la réception d'au moins un rayon laser (4), **caractérisé en ce que** l'appareil de mesure de niveau de remplissage par laser (3) est configuré en plus de la mesure du niveau de remplissage (7a) pour déterminer au moins une autre information.

2. Dispositif de préparation de boissons chaudes (1) selon la revendication 1, dans lequel l'appareil de mesure de niveau de remplissage par laser (3) est configuré pour déterminer, en plus de l'autre information, d'autres informations supplémentaires.

3. Dispositif de préparation de boissons chaudes (1) selon la revendication 1 ou 2, dans lequel l'autre information ou une des autres informations supplémentaires est la présence du récipient de liquide (2) dans le dispositif de préparation de boissons chaudes (1).

4. Dispositif de préparation de boissons chaudes (1) selon l'une quelconque des revendications précédentes, dans lequel l'autre information ou une des autres informations supplémentaires est la présence d'un filtre à eau (7b) dans le récipient de liquide (2).

5. Dispositif de préparation de boissons chaudes (1) selon l'une quelconque des revendications précédentes, dans lequel l'autre information ou une des autres informations supplémentaires est l'utilisation d'une quantité suffisante d'un détartreur (7c) dans le récipient de liquide (2).

6. Dispositif de préparation de boissons chaudes (1) selon l'une quelconque des revendications précédentes, dans lequel l'autre information ou une des autres informations supplémentaires est le niveau de remplissage (7a) d'un second récipient de liquide.

7. Dispositif de préparation de boissons chaudes (1) selon l'une quelconque des revendications précédentes, dans lequel l'appareil de mesure de niveau de remplissage par laser (3) comprend un émetteur et un récepteur pour le rayon laser (4), dans lequel une distance entre l'émetteur et un objet à mesurer est mesurée au moyen du rayon laser (4).

8. Dispositif de préparation de boissons chaudes (1) selon la revendication 7, dans lequel pour déterminer le niveau de remplissage (7a), de l'autre information et/ou de l'autre information supplémentaire, l'appareil de mesure de niveau de remplissage par laser (3) détermine l'évolution de la distance entre l'appareil de mesure de niveau de remplissage par laser (3) et l'objet à mesurer.

9. Dispositif de préparation de boissons chaudes (1) selon l'une quelconque des revendications précédentes, dans lequel l'appareil de mesure de niveau de remplissage par laser (3) analyse le récipient de liquide (2) au moyen du rayon laser (4) et génère un profil d'éloignement.

10. Dispositif de préparation de boissons chaudes (1) selon l'une quelconque des revendications précédentes, dans lequel le récipient de liquide (2) présente au moins par endroits une fenêtre transparente (5).
